# EUROPÄISCHE PATENTSCHRIFT

(11) **EP 0 788 949 B1**
(45) Veröffentlichungstag und Bekanntmachung des Hinweises auf die Patenterteilung: **09.10.2002**
(21) Anmeldenummer: 96120489.8
(22) Anmeldetag: 19.12.1996
(51) Int. Cl.: B60S 1/08, B60R 16/02

(54) **Anschluss eines Regensensor-Steuergerätes an den Fahrzeugkabelbaum**
Connection of a rain sensor control device to a wire harness of a vehicle
Raccordement d'un dispositif de contrôle d'un détecteur de pluie à un faisceau de câbles d'un véhicule

(30) Priorität: 08.02.1996 DE 19604544
(43) Veröffentlichungstag der Anmeldung: 13.08.1997
(73) Patentinhaber: ROBERT BOSCH GMBH, 70442 Stuttgart (DE)
(72) Erfinder: Meier, Hans, Dipl.-Ing., 77833 Ottersweier (DE)

(56) Entgegenhaltungen:
- EP-A- 0 521 831
- WO-A-96/11823
- DE-A- 2 944 658
- DE-U- 8 702 426

## Beschreibung

### Stand der Technik

Die Erfindung geht aus von einer Vorrichtung gemäß Oberbegriff des Hauptanspruchs.

Aus der DE 39 22 484 sind Schaltungsanordnungen zur Steuerung des Wischerintervalls von Scheibenwischern in Kraftfahrzeugen bekannt. Derartige Schaltungsanordnungen sind in der Lage, mittels eines Wischerintervallsteuergeräts die Pausenzeit zwischen zwei aufeinanderfolgenden Wischbewegungen zu ermitteln und einzustellen. Die Pausenzeit wird dabei ermittelt, indem durch Betätigen eines Wählschalters neben der Wischbewegung auch ein Zeitmeßvorgang ausgelöst wird, der mit der nächstfolgenden, vom Fahrer willkürlich ausgelösten Wischbewegung wieder endet. Die Steuerung des Wischvorgangs erfordert also den willkürlichen Eingriff des Fahrers. In vielen Fällen ist es jedoch wünschenswert, die Steuerung nicht nur vom Willen des Fahrers, sondern zusätzlich von externen Faktoren, wie der Regenintensität, abhängig zu machen und damit teilweise zu automatisieren. Zu diesem Zweck wurden Regensensorsteuergeräte entwickelt, die die Wischfrequenz in Abhängigkeit von der ermittelten Regenintensität steuern. Die Verkabelung des Regensensorsteuergerätes mit Wischermotor und Wischerschalter erfolgt gewöhnlich über den Fahrzeugkabelbaum. Als nachteilig erweist sich jedoch bei herkömmlichen Schaltungsanordnungen, daß zur Nachrüstung eines Regensensorsteuergerätes zahlreiche, neu zu verlegende Kabelverbindungen notwendig sind.

### Vorteile der Erfindung

Vorrichtungen der vorliegenden Erfindung weisen demgegenüber den Vorteil auf, daß auch der nachträgliche Einbau eines Regensensorsteuergerätes ohne großen Aufwand möglich ist.

Die Erfindung sieht eine Scheibenwischersteuervorrichtung vor, die einen Wischermotor, vorzugsweise einen Elektromotor, einen Wischerschalter und ein Regensensorsteuergerät umfaßt, wobei das Regensensorsteuergerät über einen Adapter mit dem Kabelbaum des Fahrzeugs verbindbar ist. In vorteilhafter Weise ist es gemäß der Lehre der vorliegenden Erfindung möglich, Fahrzeuge, die herkömmliche Wischerintervallsteuergeräte oder -relais aufweisen, derart umzurüsten, daß das Wischerintervallsteuergerät oder -relais durch eine einen geeigneten Adapter aufweisende Regensensorsteuervorrichtung ersetzt wird, ohne daß dabei aufwendige Verkabelungen durchgeführt werden müssen. Im Zusammenhang der vorliegenden Erfindung wird unter einer Regensensorsteuervorrichtung die erfindungsgemäße Einheit aus Regensensorsteuergerät, also eines Gerätes zur Erfassung der Niederschlagsintensität sowie entsprechenden Ansteuerung eines Wischermotors, und Adapter verstanden. Anstelle des Wischerintervallsteuergerätes oder -relais wird erfindungsgemäß ein Adapter an den Fahrzeugkabelbaum, vorzugsweise über einen Stecksockel für das Wischerintervallsteuergerät oder -relais, angeschlossen und verbindet diesen mit einem Regensensorsteuergerät. Die für das Regensensorsteuergerät erforderlichen Signale stehen an der Anschlußstelle zum Fahrzeugbaum z. B. am Stecksockel zur Verfügung.

Vorteilhafte Ausgestaltungen der Erfindung sind den Unteransprüchen zu entnehmen.

Die Erfindung sieht insbesondere eine Regensensorsteuervorrichtung vor, in der ein steckbarer Adapter mit dem Kabelbaum des Fahrzeuges über einen Stecksockel des zu ersetzenden Wischerintervallsteuergerätes oder -relais verbindbar ist. Diese besondere Ausgestaltung erlaubt den besonders einfachen Austausch des Wischerintervallsteuergerätes oder -relais durch das Regensensorsteuergerät. Der Adapter weist insbesondere das gleiche Anschlußbild wie das ausgebaute Wischerintervallsteuergerät oder -relais auf. Mit verschiedenen Adaptern, die auf das jeweilige Anschlußbild des zu ersetzenden Wischerintervallsteuergerätes oder -relais eines bestimmten Fahrzeugtypes ausgelegt sind, ist es möglich, das Regensensorsteuergerät in jedes beliebige, ein Wischerintervallsteuergerät oder -relais aufweisendes Fahrzeug einzubauen.

Selbstverständlich kann die erfindungsgemäße Regensensorsteuervorrichtung nicht nur in nachgerüsteten, sondern auch in erstausgerüsteten Fahrzeugen Verwendung finden. Die erfindungsgemäße Regensensorsteuervorrichtung kann zudem auch außerhalb des Fahrzeugbereichs eingesetzt werden, nämlich überall dort, wo herkömmliche Wischerintervallsteuergeräte oder -relais vorhanden sind, z. B. auf Kommandobrücken von Schiffen, Leuchttürmen, stationären Kränen, Flugzeugen, Flughafenkontrolltürmen etc.

Schließlich betrifft die Erfindung auch eine Scheibenwischersteuervorrichtung für einen durch einen Wischermotor angetriebenen Scheibenwischer in Fahrzeugen, die eine Regensensorsteuervorrichtung, einen Wischerschalter, einen Wischermotor und eine Regensensorsteuervorrichtung aufweist, wobei die Regensensorsteuervorrichtung wie vorstehend beschrieben ausgeführt ist, insbesondere ein Regensensorsteuergerät und einen Adapter umfaßt, wobei der Adapter so ausgebildet ist, daß er mit dem Fahrzeugkabelbaum, vorzugsweise über einen Stecksockel für ein Wischerintervallsteuergerät oder-relais, verbunden werden kann.

In einer bevorzugten Ausführungsform der Erfindung weist der Wischermotor mindestens zwei Geschwindigkeitsstufen auf. In besonders bevorzugter Weise sieht die Erfindung vor, daß die zweite Geschwindigkeitsstufe des Wischermotors über einen zusätzlichen Anschluß aus dem Adapter angesteuert wird. Der Adapter selbst weist in bevorzugter Ausführungform Schalter auf, die den Wischermotorstrom schalten. Durch die Verwendung der vom Regensensorsteuergerät angesteuerten, im Adapter befindlichen Schalter ist es möglich, kleinere Kabelquerschnitte zwischen Adapter und Regensensorsteuergerät einzusetzen.

Gemäß einer Weiterbildung der Erfindung weist der Wischerschalter Schaltpositionen für eine erste und zweite willkürlich gesteuerte Wischerstufe auf. Der Fahrer kann dementsprechend jederzeit die automatische Regensensorfunktion ausschalten und selbst Einfluß auf die Wischgeschwindigkeit nehmen. Gemäß einer Weiterbildung der Erfindung ist bei nachgerüsteten Fahrzeugen insbesondere vorgesehen, daß das Regensensorsteuergerät vom Wischerschalter ansteuerbar ist, wenn sich der Wischerschalter in der vormaligen, für das herkömmliche Wischerintervallsteuergerät geltenden Intervallposition, das heißt der jetzigen Regensensorposition befindet.

### Figur

Die Erfindung wird im folgenden anhand einer Figur näher erläutert.

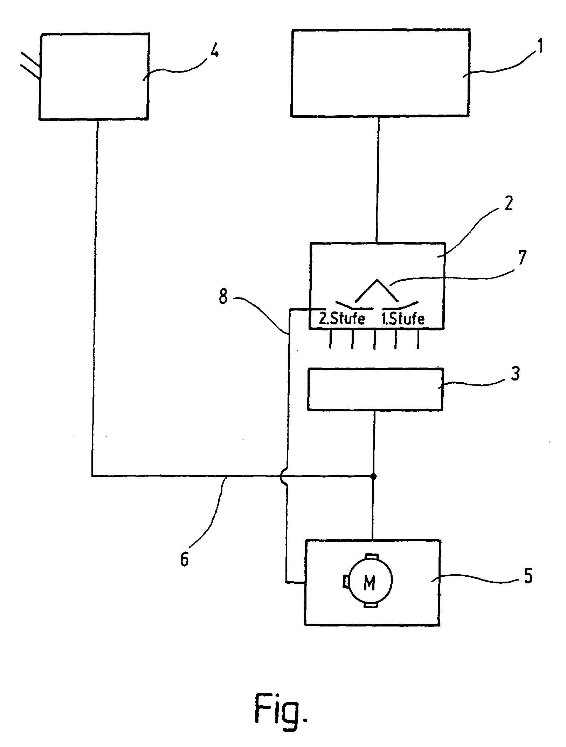

Die einzige Figur zeigt ein Blockschaltbild einer die erfindungsgemäße Regensensorsteuervorrichtung aufweisenden Scheibenwischersteuervorrichtung.

### Beschreibung des Ausführungsbeispiels

Die Figur zeigt ein Regensensorsteuergerät 1, das zusammen mit einem Adapter 2 eine Regensensorsteuervorrichtung bildet. Der Adapter 2 weist das gleiche Anschlußbild wie ein zu ersetzendes, hier nicht dargestelltes Wischerintervallsteuergerät oder-relais auf und kann dementsprechend mit dem Kabelbaum 6 über den Stecksockel 3 für das Wischerintervallsteuergerät oder -relais verbunden werden. Der Adapter 2 weist zudem Schalter 7, die den Wischermotorstrom in zwei Geschwindigkeitsstufen schalten können sowie einen zusätzlichen Anschluß 8 zum Wischermotor 5 auf. Der Wischerschalter 4 ist über den Kabelbaum 6 mit dem Wischermotor 5 und dem Stecksockel 3 für das ausgetauschte Wischerintervallsteuergerät oder -relais verbunden.

Kraftfahrzeuge herkömmlicher Bauart weisen häufig eine Scheibenwischersteuervorrichtung auf, die einen Wischerschalter, einen Wischermotor, ein Wischerintervallsteuergerät oder -relais sowie einen Stecksockel für das Wischerintervallsteuergerät oder -relais umfassen. Erfindungsgemäß ist nun vorgesehen, das Wischerintervallsteuergerät oder -relais durch eine Regensensorsteuervorrichtung aus Regensensorsteuergerät 1 und Adapter 2 zu ersetzen. Der Adapter 2 weist das gleiche Anschlußbild wie das Wischerintervallsteuergerät oder -relais auf und kann dementsprechend mit dem Stecksockel 3 verbunden werden, um so einen einfachen Anschluß des Regensensorsteuergerätes an Wischermotor und Wischerschalter zu ermöglichen.

Wenn der Wischerschalter 4 in die Intervall- beziehungsweise Regensensorposition gebracht wird, schaltet sich das Regensensorsteuergerät 1 ein. Dieses steuert dann automatisch je nach Niederschlagsintensität über Adapter 2 und Sockel 3 den Wischermotor und damit die Wischerfrequenz. Die Ansteuerung einer zweiten Geschwindigkeitsstufe des Wischermotors 5 erfolgt über den zusätzlichen Anschluß 8.

Sobald der Wischerschalter 4 wieder in die Ausgangsstellung gebracht wird, stehen dem Regensensorsteuergerät 1 am Stecksockel 3 keine entsprechenden Signale mehr zur Verfügung, so daß das Steuergerät 1 abgeschaltet und die Ansteuerung des Wischermotors 5 beendet wird.

Aus dem vorangegangenen wird deutlich, daß die vorliegende Erfindung auch ein Verfahren zur Steuerung der Wischerfrequenz eines durch einen Wischermotor angetriebenen Scheibenwischers betrifft, wobei die Steuerung mittels einer erfindungsgemäßen Steuervorrichtung erfolgt.

## Patentansprüche

1. Regensensorsteuervorrichtung für einen durch einen Wischermotor (5) angetriebenen Scheibenwischer, insbesondere in Fahrzeugen, mit einem Regensensorsteuergerät (1) und einem Adapter (2), **dadurch gekennzeichnet, daß** der Adapter (2) so ausgebildet ist, dass er, über einen Stecksockel (3) für ein Wischerintervallsteuergerät oder -relais mit dem Fahrzeugkabelbaum (6) verbindbar ist, so daß das Wischintervallsteuergerät oder -relais gegen den Adapter (2) austauschbar ist.

2. Regensensorsteuervorrichtung nach Anspruch 1, **dadurch gekennzeichnet, dass** der Adapter (2) das gleiche Anschlußbild wie das Wischerintervallsteuergerät oder-relais aufweist.

3. Regensensorsteuervorrichtung nach Anspruch 1 oder 2, **dadurch gekennzeichnet, daß** verschiedene Adapter (2) vorgesehen sind, die auf das jeweilige Anschlußbild des zu ersetzenden Wischerintervallsteuergeräts oder -relais ausgelegt sind.

4. Regensensorsteuervorrichtung nach einem der Ansprüche 1 bis 3, **dadurch gekennzeichnet, dass** der Adapter (2) Schalter (7) aufweist, die den Wischerstrom schalten.

5. Regensensorsteuerung nach einem der Ansprüche 1 bis 4, **dadurch gekennzeichnet, dass** die Ansteuerung einer zweiten Geschwindigkeitsstufe des Wischermotors (5) über einen zusätzlichen Anschluß (8) aus dem Adapter ((2) durchführbar ist.

6. Regensensorsteuerung nach einem der Ansprüche 1 bis 5, **dadurch gekennzeichnet, dass** das Regensensorsteuergerät (1) jederzeit ausschaltbar ist.

7. Scheibenwischersteuerung für einen durch einen Wischermotor angetriebenen Scheibenwischer, insbesondere in Fahrzeugen, mit einem Wischermotor (5), einem Wischerschalter (4) und einer Regensensorsteuervorrichtung, **dadurch gekennzeichnet, dass** die Regensensorsteuerung nach einem der Ansprüche 1 bis 6 ausgebildet ist.

8. Scheibenwischersteuervorrichtung nach Anspruch 7, **dadurch gekennzeichnet, dass** der Wischerschalter (4) eine Intervall- oder Regensensorposition aufweist.

9. Scheibenwischersteuervorrichtung nach einem der Ansprüche 7 und 8, **dadurch gekennzeichnet, dass** der Wischerschalter (4) Positionen für eine erste und zweite Wischstufe aufweist.

10. Scheibenwischersteuervorrichtung nach einem der Ansprüche 7 bis 9, **dadurch gekennzeichnet, dass** der Wischermotor (5) zwei Geschwindigkeitsstufen aufweist.

11. Scheibenwischersteuervorrichtung nach einem der Ansprüche 7 bis 10, **dadurch gekennzeichnet, dass** das Regensensorsteuergerät (1) vom Wischerschalter (4) ansteuerbar ist, wenn sich der Wischerschalter (4) in der vormaligen, für das Wischerintervallsteuergerät oder-relais geltenden Intervallposition befindet.

12. Verfahren zur Steuerung der Wischerfrequenz eines durch einen Wischermotor angetriebenen Scheibenwischers, **dadurch gekennzeichnet, dass** eine Regensensorsteuervorrichtung nach einem der Ansprüche 1 bis 5 verwendet wird.

## Claims

1. Rain sensor control device for a screen wiper driven by a wiper motor (5), in particular in vehicles, having a rain sensor control unit (1) and an adapter (2), **characterized in that** the adapter (2) is designed such that it can be connected to the vehicle cable tree (6) via a socket (3) for a wiper interval control unit or wiper interval control relay, such that the wiper interval control unit or wiper interval control relay can be exchanged for the adapter (2).

2. Rain sensor control device according to Claim 1, **characterized in that** the adapter (2) has the same wiring diagram as the wiper interval control unit or wiper interval control relay.

3. Rain sensor control device according to Claim 1 or 2, **characterized in that** various adapters (2) are provided which are dimensioned to the respective wiring diagram of the wiper interval control unit or wiper interval control relay to be replaced.

4. Rain sensor control device according to one of Claims 1 to 3, **characterized in that** the adapter (2) has switches (7) which switch the wiper current.

5. Rain sensor control device according to one of Claims 1 to 4, **characterized in that** a second speed level of the wiper motor (5) can be driven via an additional connector (8) from the adapter (2).

6. Rain sensor control device according to one of Claims 1 to 5, **characterized in that** the rain sensor control unit (1) can be switched off at any time.

7. Screen wiper control device for a screen wiper driven by a wiper motor, in particular in vehicles, having a wiper motor (5), a wiper switch (4) and a rain sensor control device, **characterized in that** the rain sensor control device is designed according to one of Claims 1 to 6.

8. Screen wiper control device according to Claim 7, **characterized in that** the wiper switch (4) has an interval position or rain sensor position.

9. Screen wiper control device according to one of Claims 7 and 8, **characterized in that** the wiper switch (4) has positions for a first and second wiping stage.

10. Screen wiper control device according to one of Claims 7 to 9, **characterized in that** the wiper motor (5) has two speed levels.

11. Screen wiper control device according to one of Claims 7 to 10, **characterized in that** the rain sensor control unit (1) can be driven by the wiper switch (4) when the wiper switch (4) is in the former interval position valid for the wiper interval control unit or wiper interval control relay.

12. Method for controlling the wiper frequency of a screen wiper driven by a wiper motor, **characterized in that** a rain sensor control device according to one of Claims 1 to 5 is used.

## Revendications

1. Dispositif de commande de capteur de pluie pour un essuie-glace entraîné par un moteur d'essuie-glace (5), notamment dans des véhicules, comprenant un appareil de commande de capteur de pluie (1) et un adaptateur (2),
**caractérisé en ce que**
l'adaptateur (2) est réalisé pour pouvoir être relié au faisceau de câbles (6) du véhicule par une prise (3) pour appareil ou relais de commande d'intervalle d'essuyage, pour que l'appareil ou relais de commande d'intervalle d'essuyage puisse être remplacé par l'adaptateur (2).

2. Dispositif de commande de capteur de pluie selon la revendication 1,
**caractérisé en ce que**
l'adaptateur (2) a le même schéma de connexion que l'appareil ou relais de commande d'intervalle d'essuyage.

3. Dispositif de commande de capteur de pluie selon l'une quelconque des revendications 1 ou 2,
**caractérisé en ce que**
différents adaptateurs (2) sont conçus suivant le schéma de branchement respectif de l'appareil ou relais de commande d'intervalle d'essuyage à remplacer.

4. Dispositif de commande de capteur de pluie selon l'une quelconque des revendications 1 à 3,
**caractérisé en ce que**
l'adaptateur (2) comporte des commutateurs (7) qui commutent le courant d'essuyage.

5. Dispositif de commande de capteur de pluie selon l'une quelconque des revendications 1 à 4,
**caractérisé en ce que**
la commande d'un second niveau de vitesse du moteur d'essuyage (5) se fait par un branchement supplémentaire (8) à partir de l'adaptateur (2).

6. Dispositif de commande de capteur de pluie selon l'une quelconque des revendications 1 à 5,
**caractérisé en ce que**
l'appareil de commande de capteur de pluie (1) peut être coupé à tout moment.

7. Commande d'essuie-glace pour un essuie-glace entraîné par un moteur d'essuie-glace, notamment dans des véhicules automobiles, comportant un moteur d'essuie-glace (5), un commutateur d'essuie-glace (4) et un dispositif de commande de capteur de pluie,
**caractérisée en ce que**
la commande de capteur de pluie est réalisée selon l'une des revendications 1 à 6.

8. Dispositif de commande d'essuie-glace selon la revendication 7,
**caractérisé en ce que**
le commutateur d'essuie-glace (4) comporte une position d'intervalle ou de capteur de pluie.

9. Dispositif de commande d'essuie-glace selon l'une quelconque des revendications 7 et 8,
**caractérisé en ce que**
le commutateur d'essuie-glace (4) présente des positions pour le premier et le second niveau d'essuyage.

10. Dispositif de commande d'essuie-glace selon l'une quelconque des revendications 7 à 9,
**caractérisé en ce que**
le moteur d'essuie-glace (5) présente deux niveaux de vitesse.

11. Dispositif de commande d'essuie-glace selon l'une quelconque des revendications 7 à 10,
**caractérisé en ce que**
l'appareil de commande de capteur de pluie (1) est commandé par la commutateur d'essuie-glace (4) lorsque le commutateur d'essuie-glace (4) occupe la position antérieure pour l'intervalle valable pour l'appareil ou relais de commande d'intervalle d'essuyage.

12. Procédé de commande de la fréquence d'essuyage d'un essuie-glace entraîné par un moteur d'essuie-glace,
**caractérisé en ce qu'**
il utilise un dispositif de commande de capteur de pluie selon l'une des revendications 1 à 5.
